# EUROPÄISCHE PATENTSCHRIFT

(11) **EP 0 789 178 B1**
(45) Veröffentlichungstag und Bekanntmachung des Hinweises auf die Patenterteilung: **22.12.1999**
(21) Anmeldenummer: 97100168.0
(22) Anmeldetag: 08.01.1997
(51) Int. Cl.: F16L 41/06, F16L 47/00, F16L 3/137

(54) **Spannvorrichtung für Rohrarmaturen**
Clamping device for pipe fittings
Dispositif de serrage pour appareils de robinetterie pour tuyaux

(30) Priorität: 09.01.1996 DE 29600182 U
(43) Veröffentlichungstag der Anmeldung: 13.08.1997
(73) Patentinhaber: DA-Kunststoff GmbH, 42859 Remscheid (DE)
(72) Erfinder: Janssen, Hans, Dipl.-Ing., 49413 Dinklage (DE); Thalmann, Alfred, Dipl.-Ing., 6006 Luzern (CH)
(74) Vertreter: Tragsdorf, Bodo, Dipl.-Ing.

(56) Entgegenhaltungen:
- FR-A- 1 263 523
- US-A- 3 241 800

## Beschreibung

Die Erfindung betrifft eine Spannvorrichtung für Rohrarmaturen mit einem Sattelformstück.

Abzweigungen in Rohrleitungen werden durch den Einbau von Rohrformstücken in den drucklosen und leeren Rohrstrang erstellt, oder es werden Rohrarmaturen auf bereits verlegte und allenfalls in Betrieb befindliche, gerade Rohre montiert und die Verbindung zur Abzweigleitung mittels einer Anbohrung des Hauptrohres hergestellt.
Werden schweißbare Kunststoffrohre verwendet, so ist es üblich, daß vorab die Hauptleitungen verlegt werden und daß danach Abzweigarmaturen an den gewünschten Stellen auf die Rohraußenfläche aufgeschweißt werden. Der Mediumfluß kann mit Hilfe eines vielfach verwendbaren Anbohrwerkzeuges oder mit einer, in die Rohrarmatur integrierten, von außen bedienbaren, einmalig verwendbaren Anbohrvorrichtung erstellt werden.
Entsprechend der konstruktiven Gestaltung solcher aufschweißbarer Rohrarmaturen unterscheidet man zwischen Aufschweiß-Rohrsätteln und Aufschweiß-Rohrschellen. Für die Erstellung der Schweißverbindung zwischen Rohrarmatur und Rohraußenfläche wird vorwiegend das sogenannte Elektroheizwendel-Schweißverfahren angewendet. Ein Aufschweiß-Rohrsattel wird mittels einer spezifisch gestalteten Spannvorrichtung auf das Hauptrohr geklemmt, daraufhin wird die Schweißenergie zugeführt, wobei die Spannvorrichtung einerseits die mechanische Positionierung sichern und andererseits die Flächenberührung in der Fügezone während der Zuführung der Schweißenergie, während der Verfestigung der geschmolzenen Kunststoffpartikel und bis zur Erkaltung der Schweißzone gewährleisten muß. Nach erfolgreicher Schweißung kann die Spannvorrichtung von der Abzweigstelle entfernt und für neue Schweißungen verwendet werden.
Eine solche Schweißvorrichtung ist in der EP-A2-0 088 703 beschrieben. Die Spannvorrichtung besteht aus Spannmitteln, z.B. Gurten, die um das Hauptrohr und den Sattel gelegt werden und einem Spannsystem aus Schraube und Mutter, das sich am unteren Teil des Hauptrohres befindet. Die Spannmittel können auch in der Länge verstellbar sein, um diese an verschiedene Abmessungen des Hauptrohres anpassen zu können.
Der Sattel wird mit zwei oder mehreren Spannvorrichtungen auf dem Hauptrohr befestigt. Eine Ausführungsvariante besteht auch darin, daß die Spannmittel in den Sattel eingehängt sind. Der Nachteil dieser Spannvorrichtung besteht darin, daß eine Vielzahl von Montageteilen erforderlich ist und die Montage und Demontage vor Ort sehr zeitaufwendig ist. Die Anordnung des Spannsystems an der Unterseite des Hauptrohres erweist sich in der Praxis als ungünstig. Ein wesentlicher Nachteil ist, daß der aufzubringende Anpreßdruck für den Schweißvorgang infolge mehrerer Spannvorrichtungen nicht über die gesamte Schweißfläche konstant ist und der Anpreßdruck im Laufe des Fügeprozesses nicht nachgestellt werden kann. Dadurch können nichtqualitätsgerechte Schweißverbindungen entstehen.
Eine Aufschweiß-Rohrschelle besteht mindestens aus einem Schellen-Oberteil mit Rohrabzweigung und einem Schellen-Unterteil sowie konstruktionsspezifischen Montageelementen wie Schrauben, Keilen und dergleichen. Im mechanisch auf das Hauptrohr montierten Zustand bilden diese Bestandteile eine, während dem Schweißvorgang, der Abkühlphase und über die anschließende Gebrauchsdauer an der Abzweigstelle verbleibende Einheit.
Der Nachteil der Aufschweiß-Rohrschelle besteht vor allem in dem großen Aufwand an Produktionsmitteln, insbesondere Spritzgießwerkzeugen für die mehrteiligen und von den Rohrdimensionen abhängigen Armaturkomponenten mit entsprechend erheblichem Materialbedarf für die Schellenteile und somit hohen Herstellungskosten wie auch Kosten für verlorene Teile ohne Langzeitfunktion. Zudem besteht bei der Verwendung von Armaturen mit losen Teilen die Gefahr, daß Montageteile auf der Baustelle verloren gehen. Die Schellen-Unterteile sind bedingt durch die erforderlichen hohen Wanddicken sehr materialintensiv. Verschiedene Varianten für Aufschweiß-Rohrschellen sind in den Druckschriften GB-PS 1544 441, US-PS 4,455,482, DE-A1-22 08 862, DE-U1-92 04 079.9 und DE-U1-86 15 854.6 beschrieben.
Ein wesentlicher Nachteil der Aufschweiß-Rohrschellen besteht darin, daß diese infolge ihrer starren Ausbildung kein elastisches Nachspannen während des Fügeprozesses ermöglichen.

Der Erfindung lag die Aufgabe zugrunde, eine Spannvorrichtung für Rohrarmaturen zu schaffen, die kostengünstig herstellbar ist, eine einfache Montage vor Ort ermöglicht, mit geringem Aufwand auch für Hauptrohre unterschiedlicher Durchmesser einsetzbar ist und während des Fügeprozesses ein selbsttätiges kontrolliertes Nachspannen gewährleistet.
Erfindungsgemäß wird die Aufgabe durch die im Anspruch 1 angegebenen Merkmale gelöst. Weitere Ausgestaltungsvarianten sind in den Unteransprüchen 2 bis 12 angegeben.
Die Spannvorrichtung besteht aus insgesamt drei Bauteilen, nämlich einem stabilen flexiblen Oberteil, einem stabilen Spannbalken und mindestens einem Spannband, sowie mindestens einer Spannschraube. Der Spannbalken und das Oberteil können kostengünstig im Kunststoffspritzgußverfahren hergestellt werden. Da die beiden Verlängerungsteile an dem Oberteil über ein Filmscharnier mit diesem verbunden sind, kann die Spannvorrichtung an Hauptrohre verschiedener Durchmesser angepaßt werden, durch den Einsatz in der Länge unterschiedlicher Spannbänder. Als Spannband ist besonders gut ein PE-Band geeignet, das im Extrusionsverfahren hergestellt wird und als Rollenband vorliegt. Das Spannband muß aus einem Material mit einer hohen Reißfestigkeit und einer hohen elastischen Längsdehnung bestehen, um während des Fügeprozesses des Sattelformstückes durch Schweißen die erforderliche elastische Nachspannung zu bewirken. Der Querschnitt und die Länge des Spannbandes sind so dimensioniert, daß bei Blockanzug der Spannschrauben der Spannvorrichtung vor dem Einleiten des Schweißvorganges für das Sattelformstück das Spannband so gedehnt wird, daß die aus der Dehnspannung resultierende Umfangskraft die Fügepressung während der Schweißung nachführend sichert.
Die Langzeiteigenschaften einer Schweißverbindung beim Einsatz des Elektroheizwendel-Schweißverfahrens hängen, neben den energetischen Rahmenbedingungen, maßgeblich vom geometrischen Fügezustand der Schweißzone vor und während dem Schweißvorgang, d.h. dem Aufbau und der Aufrechterhaltung des Schmelzedruckes ab.
Im kalten Montagezustand sind Abweichungen der Passgenauigkeit im Fügebereich nicht vermeidbar. Während der Aufheizphase besteht die Möglichkeit der formspezifischen Angleichung der Fügeflächen, vorausgesetzt, die im kalten Zustand aufgebrachte Presskraft wird bei Passungsveränderungen laufend nachgeführt.
Die Spannvorrichtung erfüllt diese Anforderungen und gewährleistet somit eine hohe Qualität, auch im Langzeitverhalten für die herzustellende Schweißverbindung zwischen dem Hauptrohr und dem Sattelformstück.
Das Oberteil weist entsprechend der konstruktiven Ausgestaltung der Rohrarmatur die erforderlichen Aussparungen auf. Das eine Ende des zugeschnittenen Spannbandes wird an dem Verbindungslappen des Verlängerungsteiles angeschweißt. Das andere Ende des Spannbandes wird mit dem Verbindungslappen des Spannbalkens verschweißt. Das Spannband kann mit den jeweiligen Bauteilen auch auf eine andere Art als Schweißen verbunden werden, die jedoch geeignet sein muß, die erforderlichen Zugkräfte beim Spannvorgang aufzunehmen. Die Spannschrauben werden in die im Spannbalken vorgesehenen Bohrungen eingeschraubt. Das Oberteil der Spannvorrichtung wird auf das Sattelformstück der Rohrarmatur aufgesetzt und verrastet. Die Rohrarmatur mit integrierter Spannvorrichtung stellt somit eine einbaufertige Einheit dar, die keine losen Teile aufweist und vor Ort mit wenigen Handgriffen auf das Hauptrohr montiert werden kann. Mit der zusammengefügten Anordnung ist eine Spannwirkung erzeugbar, welche maßgeblich durch die Dimensionierung und Materialeigenschaften des Spannbandes bestimmt wird. Ist die Rohrarmatur lediglich einfacher Bauart, z.B. ein Stutzensattel oder ein Ventilanbohrsattel, so sind geeignete Mittel vorgesehen, die ein sicheres Verrasten des Oberteiles der Spannvorrichtung mit dem Sattelformstück der Rohrarmatur ermöglichen. In bestimmten Anwendungsfällen kann es auch erforderlich sein, daß die Spannvorrichtung erst unmittelbar vor Ort vor der Montage der Rohrarmatur auf diese aufgesetzt wird. Rohrarmaturen mit einem Sattelformstück weisen in der Regel einen in Längsrichtung verlaufenden Mittelsteg auf. Vorteilhaft für den Spannvorgang ist es, wenn das Oberteil der Spannvorrichtung eine entsprechende Führung aufweist, die nach dem Aufsetzen der Spannvorrichtung auf das Sattelformstück den Mittelsteg umgibt. Durch diese formschlüssige Verbindung wird einerseits das Oberteil in der richtigen Lage positioniert und während des Spannvorganges erfolgt über den Mittelsteg eine gezielte Krafteinleitung, wobei über die Filmscharniere zwischen dem Oberteil und den beiden Verlängerungsteilen eine Kraftumleitung tangential zum Rohr erfolgt.
Im Vergleich zu den bekannten Spannvorrichtungen kann die erfindungsgemäße Spannvorrichtung sehr kostengünstig hergestellt werden und erfordert nur einen geringen Materialaufwand. Für die Montage zusammen mit der Rohrarmatur vor Ort werden keine Spezialwerkzeuge benötigt, lediglich ein Schraubendreher. Da der Spannbalken und das Oberteil für verschiedene Rohrdurchmesser einsetzbar sind, minimieren sich die Herstellungskosten erheblich und der Aufwand an teuren Spritzgießwerkzeugen wird reduziert.
Da die Spannvorrichtung aus einer geschlossenen Baueinheit besteht und nicht aus losen Einzelteilen, wird einerseits die Montage vor Ort vereinfacht und die Gefahr, daß Einzelteile verlorengehen ist somit weitestgehend ausgeschlossen.
Die Spannvorrichtung kann für alle Arten von Rohrarmaturen mit einem Sattelformstück, die auf einem Hauptrohr montiert werden müssen, verwendet werden.
Die Spannvorrichtung ist vorwiegend als Einweg-Spannvorrichtung konzipiert, d.h. nach der Montage der Rohrarmatur auf dem Hauptrohr wird die Spannvorrichtung nicht wieder entfernt.

Die Erfindung soll nachstehend an einem Ausführungsbeispiel näher erläutert werden. In der zugehörigen Zeichnung zeigen
- Fig. 1: einen auf einem Hauptrohr mit der erfindungsgemäßen Spannvorrichtung montierten Anbohrsattel im Querschnitt,
- Fig. 2: die Spannvorrichtung als Einzelbauteil im Querschnitt und
- Fig. 3: eine Draufsicht auf das Oberteil der Spannvorrichtung.

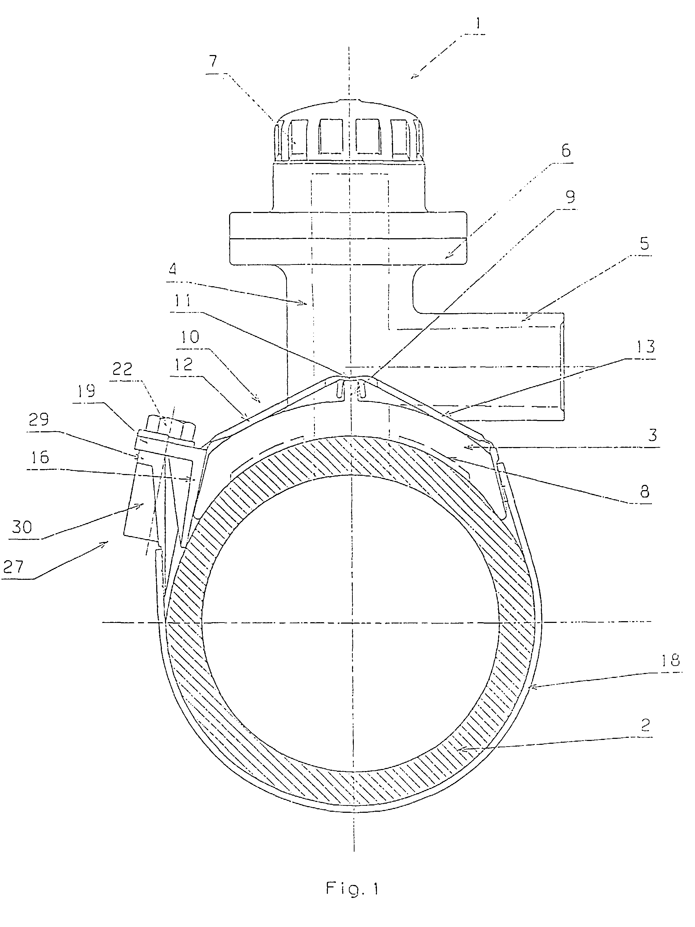

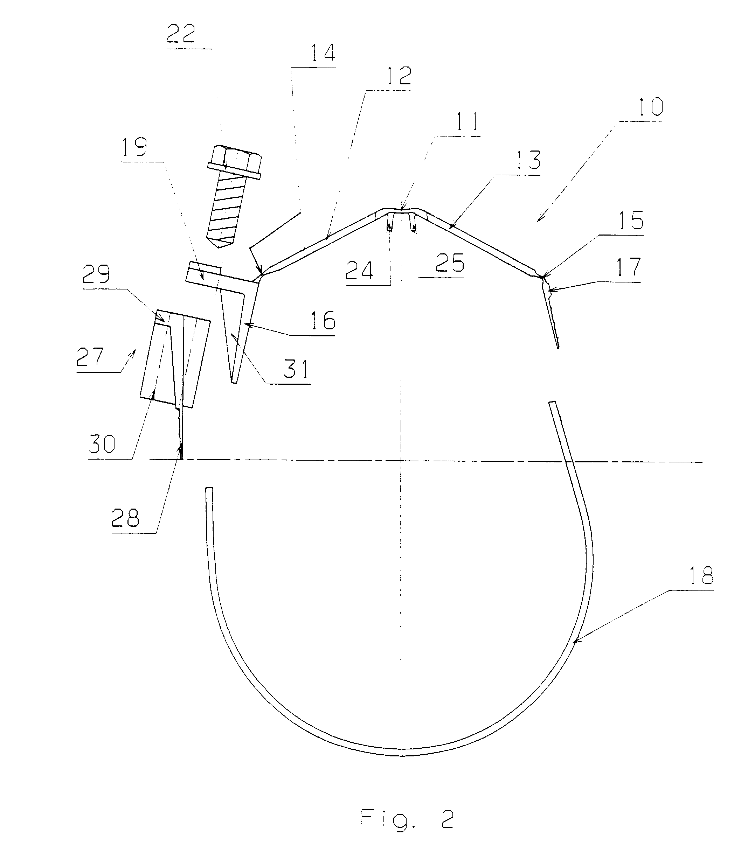

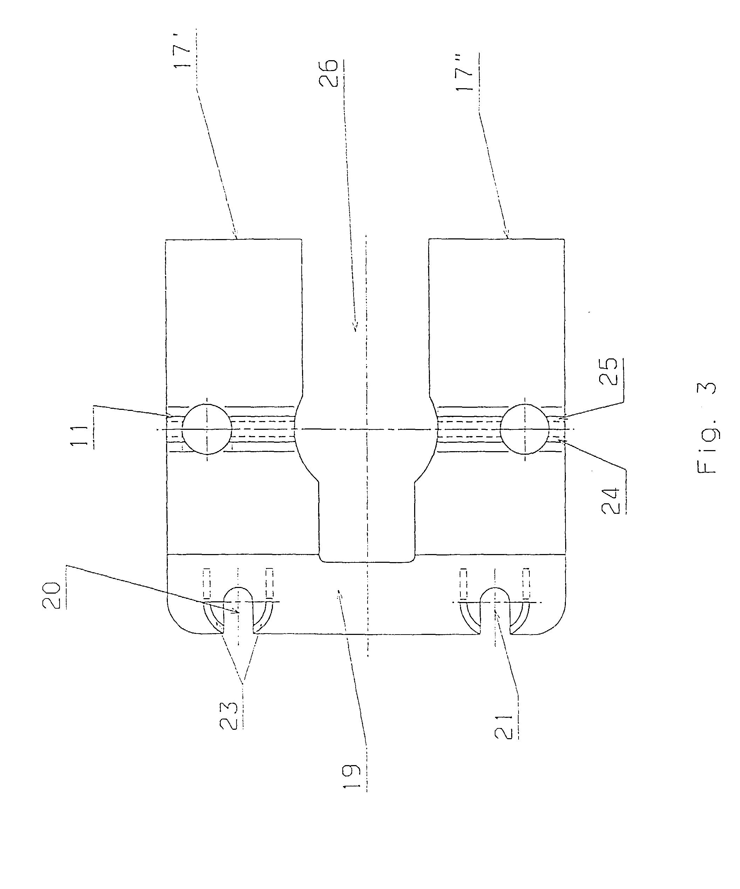

In der Figur 1 ist ein Anbohrsattel 1 aus Kunststoff als Rohrarmatur dargestellt, der auf einem Hauptrohr 2 aus Kunststoff aufgeschweißt wird, unter Verwendung einer Spannvorrichtung.
Der Anbohrsattel besteht aus einem Sattelformstück 3, einem senkrechten Rohrstutzen 4, in dem ein nicht näher dargestelltes Schneidwerkzeug axial beweglich geführt ist, und einem Abzweigstutzen 5, über den nach dem Aufbohren des Hauptrohres 2 ein Teilstrom des im Hauptrohr geführten Mediums abgeführt wird. An dem senkrechten Rohrstutzen 4 befindet sich ein flanschförmiger Ansatz 6, in einem bestimmten axialen Abstand zu dem freien Ende des Rohrstutzens 4, auf das eine Schraubkappe 7 aufgeschraubt ist. In dem Sattelformstück 3 ist an der Unterseite eine Ausnehmung 8 vorgesehen, in der eine nicht näher dargestellte Schweißdrahtspirale eingelegt ist, deren Enden mit Kontaktfahnen verbunden sind, die aus dem Sattelformstück senkrecht herausragen. Die beiden Kontaktfahnen sind jeweils von einer hülsenförmigen Aufnahme umgeben. Die hülsenförmigen Aufnahmen sind mittig auf der Längsachse des Sattelformstückes angeordnet, eine vor und die andere hinter dem senkrechten Rohrstutzen 4. Jeweils zwischen den beiden hülsenförmigen Aufnahmen und dem senkrechten Rohrstutzen 4 befindet sich der Mittelsteg 9. Der Anbohrsattel 1 wird nach dem Festspannen mittels der Spannvorrichtung mit dem Hauptrohr 2 verschweißt. Der Aufbau der Spannvorrichtung ist im einzelnen in den Figuren 2 und 3 dargestellt. Die Spannvorrichtung besteht aus einem stabilen flexiblen Oberteil 10, das der Oberflächenkontur des Sattelformstückes 3 des Anbohrsattels 1 angepaßt ist. Das Oberteil 10 weist mittig ein schmales abgeflachtes Teilstück 11 auf, das nach der rechten und linken Seite jeweils mit einem Schulterteil 12, 13 verbunden ist. An den nach unten gerichteten Enden der Schulterteile 12, 13 sind jeweils über ein Filmscharnier 14, 15 Verlängerungsteile 16, 17 angeformt. Das rechte Verlängerungsteil 17 ist gleichzeitig als Verbindungslappen ausgebildet, der aus zwei Teilstücken 17' und 17'' besteht, an denen das eine Ende des Spannbandes 18 angeschweißt ist. Das linke Verlängerungsteil 16 weist einen rechtwinklig angeformten Steg 19 auf, in dem zwei einseitig offene Langlöcher 20, 21 zur Aufnahme je einer Spannschraube 22 angeordnet sind. Um ein seitliches Wegrutschen der Spannschrauben 22 während der Montage zu verhindern, sind im Bereich der Lochränder zwei halbkreisförmige Rippen 23 angeordnet. An der Unterseite des schmalen abgeflachten Teilstückes 11 befinden sich zwei in Längsrichtung verlaufende Haltestege 24, 25, die eine nutförmige Führung bilden, die im angelegten Zustand der Spannvorrichtung den Mittelsteg 9 des Sattelformstückes 3 umgibt (Fig. 1). Wie auch in Figur 1 zu sehen ist, ragen die beiden beweglichen Verlängerungsteile 16, 17 über das Sattelformstück 3 hinaus und können je nach Außendurchmesser des Hauptrohres 2 mit diesem in Berührungskontakt stehen. Infolge der Ausbildung der Rohrarmatur als Anbohrsattel ist das Oberteil 10 mittig mit einer Aussparung 26 versehen, die an der rechten Seite offen ist. Demzufolge besteht das Verlängerungsteil 17 aus zwei Teilstücken 17' und 17". Die Aussparung 26 ist erforderlich, damit das Oberteil 10 auf das Sattelformstück 3 des Anbohrsattels 1 aufgesetzt werden kann. Weist die Rohrarmatur lediglich einen senkrechten Rohrstutzen ohne Abzweig auf, so ist nur eine kreisrunde Aussparung erforderlich, um das Oberteil auf das Sattelformstück aufzusetzen.
Zu der Spannvorrichtung gehört als weiteres Bauteil noch ein stabiler Spannbalken 27, dessen unteres Ende als Verbindungslappen 28 ausgebildet ist, der an dem anderen Ende des Spannbandes 18 angeschweißt wird. Der Spannbalken 27 weist einen an der Oberseite angeformten Anschlag 29 auf. An dem Spannbalken 27 sind zwei parallel zur Hauptrohrtangente verlaufende Hülsen 30 angeordnet, die als Verbindungs- bzw. Befestigungselement für die Spannschrauben 22 dienen. Die Spannschrauben 22 sind als selbstschneidende Schrauben ausgebildet, so daß ein gesonderter Gewindeeinsatz nicht erforderlich ist. Unterhalb der beiden Langlöcher 20, 21 sind an dem Verlängerungsteil 16 des Oberteiles 10 jeweils zwei Verstärkungsrippen 31 angeordnet, die gleichzeitig als Führung für die beiden Hülsen 30 dienen. Der Spannbalken 27 und das Oberteil 10 der Spannvorrichtung bestehen aus Kunststoff und werden als Spritzgußteil hergestellt. Das Spannband 18 besteht aus einem Material mit einer hohen Reißfestigkeit und einer hohen elastischen Längsdehnung, z.B. aus Polyethylen.
In der Figur 1 ist die Spannvorrichtung im fertig montierten Zustand eines Anbohrsattels 1 auf einem Hauptrohr 2 gezeigt. Wie bereits erläutert, bilden die Spannvorrichtung und der Anbohrsattel eine vorgefertigte Baueinheit, in der auch bereits die beiden Spannschrauben 22 in den Hülsen 30 des Spannbalkens 27 eingeschraubt sind. Nach dem Aufsetzen des Anbohrsattels 1 auf das Hauptrohr 2 wird das freie Ende des Spannbandes 18 mit dem Spannbalken 27 um das Hauptrohr 2 gelegt und die aus dem Spannbalken herausragenden Spannschrauben 22 werden in die Langlöcher 20, 21 des Steges 19 des linken Verlängerungsteiles 16 eingeführt und durch ein kurzes Ziehen des Spannbandes 18 nach unten werden die Schraubenköpfe infolge der halbkreisförmigen Rippen 23 arretiert und können nicht mehr seitlich wegrutschen. Der Monteur braucht lediglich noch die beiden Spannschrauben 22 mittels eines Schraubendrehers auf Blockposition von Anschlag 29 und Steg 19 anzuziehen, wobei das Spannband elastisch gedehnt wird.
Während des Anziehens der Schrauben erfolgt über den Mittelsteg 9 eine gezielte Krafteinleitung, um den erforderlichen Anpreßdruck für das nachfolgende Anschweißen des Anbohrsattels zu erzielen. Gleichzeitig erfolgt über die Filmscharniere 14, 15 an dem Oberteil 10 eine Kraftumleitung tangential zum Hauptrohr. Wie bereits ausführlich erläutert, bewirkt die Spannvorrichtung während des Schweißvorganges ein elastisches Nachspannen.
Die Auflagekraft zwischen Hauptrohr 2 und Sattelformstück 3 ist vor und während der Sattelschweißung durch die, zur Längung des Spannbandes 18 über die Spannschrauben 22 eingebrachte Umfangskraft bestimmt, welche vom Materialquerschnitt und der Materialfestigkeit des Spannbandes 18 abhängt. Das Spannband 18 weist im Beispiel eine Breite auf, die der Länge des Sattelformstückes 3 des Anbohrsattels entspricht, wobei als Länge der Abstand zwischen den beiden Stirnseiten des Sattelformstückes 3 bestimmt ist und die Dicke des Spannbandes 18 ist dementsprechend dimensioniert, daß die Kraftbedingungen für den zu schweißenden Armaturentyp und für die Hauptrohrgröße erfüllt werden. Mit der Wahl des Spannbandquerschnittes werden somit die Kräfteverhältnisse auf einfachste Art vorbestimmt. Die Zuschnittlänge des Spannbandes 18 ist, der Hauptrohrgröße entsprechend so gewählt, daß einerseits die Durchmessertoleranz des Hauptrohres 2 kompensiert und andererseits die Auflagebedingungen zwischen Hauptrohr 2 und Sattelformstück 3 vor und während der Sattelschweißung gewährleistet werden.

## Patentansprüche

1. Spannvorrichtung einer aufschweißbaren Rohrarmatur, wobei die Rohrarmatur nach dem Festspannen mittels der Spannvorrichtung auf einem Leitungsrohr aufgeschweißt wird und ein Sattelformstück zur Aufnahme einer Schweißdrähtspirale aufweist und wobei die Spannvorrichtung aus folgenden Bauteilen besteht :
a) aus einem stabilen flexiblen Oberteil (10), das der Oberflächenkontur des Sattelformstückes (3) angepaßt ist und auf das Sattelformstück (3) aufsetzbar und auf diesem gegen Verschieben oder Verrutschen gesichert ist, und an den beiden Längsseiten jeweils ein Verlängerungsteil (16,17) aufweist, die über jeweils ein Filmscharnier (14, 15) mit dem Oberteil (10) verbunden sind, wobei das eine Verlängerungsteil (16) einen nach außen gerichteten, im rechten Winkel zu dem Verlängerungsteil (16) angeordneten stabilen Steg (19) aufweist, der mindestens eine Öffnung (20, 21) zur Aufnahme einer Schraube (22) aufweist, und das andere Verlängerungsteil (17) als Verbindungslappen ausgebildet ist,
b) aus einem stabilen Spannbalken (27) mit einem an der Oberseite angeformten Anschlag (29) und mindestens einem Verbindungselement (30) für die Verschraubung mit dem Oberteil (10), wobei an dem unteren Ende des Spannbalkens (27) ein Verbindungslappen (28) angeformt ist und
c) aus mindestens einem Spannband (18) mit einer hohen Reißfestigkeit und hoher elastischer Längsdehnung, wobei das eine Ende des Spannbandes (18) an dem Verbindungslappen (17) des Oberteiles (10) und das andere Ende des Spannbandes (18) an dem Verbindungslappen (28) des Spannbalkens (27) befestigt ist.

2. Spannvorrichtung nach Anspruch 1, dadurch gekennzeichnet, daß das Oberteil (10) an seiner Unterseite mittig eine in Längsrichtung verlaufende nutförmige Führung (24, 25) aufweist, die im aufgesetzten Zustand des Oberteiles (10) einen an der Oberseite des Sattelformstückes (3) befindlichen Mittelsteg (9) umgibt.

3. Spannvorrichtung nach einem der Ansprüche 1 oder 2, dadurch gekennzeichnet, daß die Öffnungen in dem Steg (19) des Verlängerungsteiles (16) des Oberteils (10) als quer zur Längsachse verlaufende, an einer Seite offene Langlöcher (20, 21) ausgebildet sind, und im Bereich des Lochrandes am Steg (19) Anschläge (23) zur Arretierung des Schraubenkopfes (22) vorgesehen sind.

4. Spannvorrichtung nach einem der Ansprüche 1 bis 3, dadurch gekennzeichnet, daß an dem für die Verschraubung bestimmten Verlängerungsteil (16) des Oberteiles (10) unterhalb der Öffnungen (20, 21) für die Schrauben (22) Führungen (31) für die Verbindungselemente (30) des Spannbalkens (27) vorgesehen sind.

5. Spannvorrichtung nach einem der Ansprüche 1 bis 4, dadurch gekennzeichnet, daß das Oberteil (10) mittig eine quer zur Längsrichtung verlaufende Aussparung (26) aufweist, die in ihrer Breite dem Außendurchmesser des senkrechten Rohrstutzens (4) der Rohrarmatur angepaßt ist und infolge der Aussparung (26) der als Verbindungslappen ausgebildete Verlängerungsteil (17) aus zwei Teilstücken (17', 17") besteht.

6. Spannvorrichtung nach einem der Ansprüche 1 bis 5, dadurch gekennzeichnet, daß das Spannband (18) eine Breite aufweist, die gleich der Länge des Sattelformstückes (3) ist.

7. Spannvorrichtung nach einem der Ansprüche 1 bis 6, dadurch gekennzeichnet, daß das Oberteil (10) und der Spannbalken (27) als Kunststoffspritzgußteile ausgebildet sind.

8. Spannvorrichtung nach einem der Ansprüche 1 bis 7, dadurch gekennzeichnet, daß das Spannband (18) aus Polyethylen besteht und mit dem jeweiligen Verbindungslappen des Oberteiles (10) und des Spannbalkens (27) verschweißbar ist.

9. Spannvorrichtung nach einem der Ansprüche 1 bis 8, dadurch gekennzeichnet, daß die Verbindungselemente (30) an dem Spannbalken (27) als Kunststoffbefestigungsteil für selbstschneidende Schrauben (22) ausgebildet sind.

10. Spannvorrichtung nach einem der Ansprüche 1 bis 8, dadurch gekennzeichnet, daß in den Verbindungselementen (30) an den Spannbalken (27) Gewindeeinsätze angeordnet sind.

11. Spannvorrichtung nach einem der Ansprüche 1 bis 10, dadurch gekennzeichnet, daß diese und die Rohrarmatur (1) als eine einbaufertige Einheit ausgebildet sind.

12. Spannvorrichtung nach einem der Ansprüche 1 bis 11, dadurch gekennzeichnet, daß das Sattelformstück (3) und das Oberteil (10) der Spannvorrichtung miteinander verrastbar sind.

## Claims

1. Clamping device for a pipe fitting attachable by welding, the pipe fitting being welded, after the clamping operation using the clamping device, onto a conduit pipe, the clamping device having a shaped saddle part to accommodate a welding wire spiral and comprising the following components:
(a) a stable flexible upper part (10) which is adapted to the surface contour of the shaped saddle part (3) and which can be placed on the said shaped saddle part (3) and which is secured on this latter against slipping or sliding out of position and which has on each longitudinal side an extension (16,17) which are connected by a respective film hinge (14,15) with the upper part (10), one extension (16) having a stable web (19) which is positioned at right angles to the extension (16) and which has at least one aperture (20,21) serving to accommodate a bolt (22), while the other extension (17) has the form of a connecting tab,
(b) a stable clamping flange (27) with an abutment (29) formed on the upper part and with at least one connecting element (30) for the bolt connection with the upper part (10), a connecting tab (28) being formed onto the lower end of the clamping flange (27), and
(c) at least one clamping strap (18) of high tensile strength and high elastic longitudinal extension, one end of the clamping strap (18) being affixed to the connecting tab (17) of the upper part (10) and the other end of the clamping strap (18) being affixed to the connecting tab (28) of the clamping
flange (27).

2. Clamping device according to Claim 1, characterised in that the upper part (10) is provided centrally on the lower side thereof with a groove-shaped guide (24,25) which takes the longitudinal direction and which, when the upper part (10) is in the mounted position, embraces a central web (9) provided on the upper side of the shaped saddle part (3).

3. Clamping device according to either of Claims 1 or 2, characterised in that the apertures in the web (19) of the extension (16) of the upper part (10) take the form of slots (20,21) open on one side and transverse to the longitudinal axis, stops (23) serving to retain the bolt head (22) being provided on the zone of the edge of the aperture on the traverse (19).

4. Clamping device according to any one of Claims 1 to 3, characterised in that, on the extension (16) of the upper part (10), intended for the bolt connection, guides (31) are provided underneath the apertures (20,21) for the bolts (22) and serve for the connecting elements (30) of the clamping flange (27).

5. Clamping device according to any one of Claims 1 to 4, characterised in that the upper part (10) is provided centrally with a recess (26) which takes a transversal course to the longitudinal direction and which corresponds in width to the external diameter of the vertical pipe section (4) of the pipe fitting, and that as a result of the recess (26) the extension (17) taking the form of a connecting tab consists of two separate parts (17', 17").

6. Clamping device according to any one of Claims 1 to 5, characterised in that the upper part (10) and the clamping flange (27) consist of injection-moulded plastic parts.

7. Clamping device according to any one of Claims 1 to 6, characterised in that the upper part (10) and the clamping flange (27) consist of injection-moulded plastic parts.

8. Clamping device according to any one of Claims 1 to 7, characterised in that the clamping strap (18) consists of polyethylene and can be welded to the connecting tab of the upper part (10) and to that of the clamping flange (27).

9. Clamping device according to any one of Claims 1 to 8, characterised in that the connecting elements (30) on the clamping flange (27) consist of a plastic connecting part for bolts (22).

10. Clamping device according to any one of Claims 1 to 8, characterised in that screw-threaded inserts are provided in the connecting elements (30) on the clamping flange (27).

11. Clamping device according to any one of Claims 1 to 10, characterised in that the said device and the pipe fitting (1) are constructed as a unit ready for installation.

12. Clamping device according to any one of Claims 1 to 11, characterised in that the shaped saddle part (3) and the upper part (10) of the clamping device can be interlocked by a catch system.

## Revendications

1. Dispositif de serrage d'une pièce de robinetterie pour tuyau susceptible d'être soudée, la pièce de robinetterie pour tuyau étant soudée, après avoir été fixée, sur un tuyau de conduite au moyen du dispositif de serrage et présentant une pièce en forme de selle destinée à réceptionner une baguette de soudure en spirale, le dispositif de serrage se composant des éléments suivants :
a) d'un élément supérieur (10) flexible stable qui est adapté aux contours de la superficie de la pièce en forme de selle (3), qui est susceptible d'être placé sur la pièce en forme de selle (3), qui est fixée sur celle-ci l'empêchant de se déplacer ou de glisser et qui présente sur chacun de ses flancs une rallonge (16, 17) reliée à l'élément supérieur (10) par l'intermédiaire d'une charnière pelliculaire (14, 15), l'une des rallonges (16) présentant une traverse (19) stable dirigée vers l'extérieur et disposée à angle droit par rapport à la rallonge (16) qui présente au moins une ouverture (20, 21) destinée à réceptionner une vis (22), et l'autre rallonge (17) étant développée en languette de connexion,
b) d'une barre de serrage (27) stable munie d'un butoir (29) dont la face supérieure présente une forme adéquate et d'au moins un élément de connexion (30) destiné à être vissé avec l'élément supérieur (10), une languette de connexion (28) étant formée à l'extrémité inférieure de la barre de serrage (27) et
c) d'au moins un collier de serrage (18) présentant une résistance à la rupture et un allongement longitudinal élastique élevés, l'une des extrémités du collier de serrage (18) étant fixée à la languette de connexion (17) de l'élément supérieur (10) et l'autre extrémité du collier de serrage (18) étant fixée à la languette de connexion (28) de la barre de serrage (27).

2. Dispositif de serrage selon la revendication 1, caractérisé par le fait que l'élément supérieur (10) présente au milieu de sa face inférieure un guidage (24, 25) en forme de rainure qui s'étend dans le sens longitudinal et qui entoure une traverse médiane (9) se trouvant sur la face supérieure de la pièce en forme de selle (3) lorsque l'élément supérieur (10) est en place.

3. Dispositif de serrage selon l'une des revendications 1 ou 2, caractérisé par le fait que les ouvertures se trouvant dans la traverse (19) de la rallonge (16) de l'élément supérieur (10) sont développées en trous oblongs (20, 21) ouverts sur un côté et s'étendant diamétralement par rapport à l'axe longitudinal et que des butoirs (23) destinés à arrêter la tête de la vis (22) sont prévus dans le domaine du bord des trous situés au niveau de la traverse (19).

4. Dispositif de serrage selon l'une des revendications 1 à 3, caractérisé par le fait que des guidages (31) pour les éléments de connexion (30) de la barre de serrage (27) sont prévus à la rallonge (16) de l'élément supérieur (10) destinée au vissage en dessous des ouvertures (20, 21) pour les vis (22).

5. Dispositif de serrage selon l'une des revendications 1 à 4, caractérisé par le fait que l'élément supérieur (10) présente au centre un évidement (26) s'étendant diamétralement par rapport au sens longitudinal qui est adapté dans sa largeur au diamètre extérieur de la tubulure verticale (4) de la pièce de robinetterie pour tuyau et que, en raison de l'évidement (26), la rallonge (17) développée en languette de connexion se compose de deux tronçons (17', 17").

6. Dispositif de serrage selon l'une des revendications 1 à 5, caractérisé par le fait que le collier de serrage (18) présente une largeur égale à la longueur de la pièce en forme de selle (3).

7. Dispositif de serrage selon l'une des revendications 1 à 6, caractérisé par le fait que l'élément supérieur (10) et la barre de serrage (27) sont développés en pièces de matière synthétique moulées par injection.

8. Dispositif de serrage selon l'une des revendications 1 à 7, caractérisé par le fait que le collier de serrage (18) se compose de polyéthylène et qu'il est susceptible d'être soudé à la languette respective de l'élément supérieur (10) et de la barre de serrage (27).

9. Dispositif de serrage selon l'une des revendications 1 à 8, caractérisé par le fait que les éléments de connexion (30) situés au niveau de la barre de serrage (27) sont développés en pièces de matière synthétique nécessaires au montage de vis autoperceuses (22).

10. Dispositif de serrage selon l'une des revendications 1 à 8, caractérisé par le fait que des douilles taraudées sont disposées dans les éléments de connexion (30) situés à la barre de serrage (27).

11. Dispositif de serrage selon l'une des revendications 1 à 10, caractérisé par le fait que celui-ci ainsi que la pièce de robinetterie pour tuyau (1) sont développés en unité prête à être montée.

12. Dispositif de serrage selon l'une des revendications 1 à 11, caractérisé par le fait que la pièce en forme de selle (3) et l'élément supérieur (3) du dispositif de serrage sont susceptibles de s'encliqueter l'un dans l'autre.
